# EUROPÄISCHE PATENTSCHRIFT

(11) **EP 2 758 703 B1**
(45) Veröffentlichungstag und Bekanntmachung des Hinweises auf die Patenterteilung: **24.02.2021**
(21) Anmeldenummer: 12766414.2
(22) Anmeldetag: 19.09.2012
(51) Int. Cl.: F16M 11/12, B67D 7/84, F16L 37/56, F16M 11/20, F16M 11/24, B67D 7/02, B67D 7/38, B67D 7/78

(54) **HALTEGESTELL FÜR EINE MULTIKUPPLUNG ZUM BEFÜLLEN UND/ODER ENTLEEREN EINES CHEMIEANLAGENCONTAINERS**
RETAINING FRAME FOR A MULTICOUPLING FOR FILLING AND/OR DRAINING A CHEMICAL PLANT CONTAINER
CHÂSSIS DE SUPPORT POUR RACCORD MULTIPLE POUR REMPLIR ET/OU VIDER UN CONTENEUR D'INSTALLATION CHIMIQUE

(30) Priorität: 20.09.2011 DE 102011053800
(43) Veröffentlichungstag der Anmeldung: 30.07.2014
(73) Patentinhaber: Bayer Aktiengesellschaft, 51373 Leverkusen (DE)
(72) Erfinder: LIPSKI, Florian, 40235 Düsseldorf (DE); MONSCHEUER, Gerhard, 51375 Leverkusen (DE); FRYE, Lars, 42799 Leichlingen (DE); REINOLD, Oliver, 42799 Leichlingen (DE); GÜNDOGAN, Yasar, 51145 Köln (DE); ENGELSTÄDTER, Reinhard, 50354 Hürth (DE)
(74) Vertreter: BIP Patents
(86) Internationale Anmeldenummer: PCT/EP2012/068464
(87) Internationale Veröffentlichungsnummer: WO 2013/041583

(56) Entgegenhaltungen:
- EP-A2- 1 624 116
- JP-A- 61 014 008
- US-A- 3 774 636
- US-A1- 2009 322 072

## Beschreibung

Die vorliegende Erfindung betrifft Haltegestell für eine Multikupplung zum Befüllen und/oder Entleeren eines Chemieanlagencontainers, mit dessen Hilfe die Multikupplung befestigt werden kann.

Aus US 2009/0322072 A1 ist eine Multikupplung bekannt, mit deren Hilfe mehrere Schlauchleitungen einer stationären Seite gleichzeitig mit korrespondierenden Schlauchleitungen einer beweglichen Seite gekuppelt werden können.

Aus EP 1 624 116 A2 ist eine Multikupplung gemäß dem Oberbegriff von Anspruch 1 bekannt.

Es besteht ein ständiges Bedürfnis das Kuppeln einer Multikupplung zu vereinfachen.

Es ist die Aufgabe der Erfindung Maßnahmen anzugeben, die ein einfaches Kuppeln einer Multikupplung ermöglichen.

Die Lösung der Aufgabe erfolgt erfindungsgemäß durch ein Haltegestell für eine Multikupplung zum Befüllen und/oder Entleeren eines Chemieanlagencontainers mit den Merkmalen des Anspruchs 1. Bevorzugte Ausgestaltungen der Erfindung sind in den Unteransprüchen angegeben. Erfindungsgemäß ist ein Haltegestell für eine Multikupplung zum Befüllen und/oder Entleeren eines Chemieanlagencontainers vorgesehen mit einer Montageeinrichtung zur im Wesentlichen stationären Befestigung des Haltegestells und mindestens einer mittelbar oder unmittelbar mit der Multikupplung koppelbaren Ausgleichseinrichtung zur Variation einer Position der Multikupplung relativ zur Montageeinrichtung in vertikaler Richtung und/oder in horizontaler Richtung und/oder zur Variation einer Winkellage der Multikupplung relativ zur Montageeinrichtung um eine vertikale und/oder horizontale Drehachse, wobei die mindestens eine mittelbar oder unmittelbar mit der Multikupplung koppelbare Ausgleichseinrichtung eine Schrägausgleicheinrichtung ist zum Verschwenken der Multikupplung um eine, insbesondere im Wesentlichen vertikal, quer zu einer designierten, insbesondere im Wesentlichen horizontalen, Kontaktrichtung zum Verbindung einer männlichen Kupplung mit einer weiblichen Kupplung verlaufende Schrägachse, wobei ein erster Haltearm zur schwenkbaren Lagerung der Multikupplung und ein zweiter Haltearm zur schwenkbaren Lagerung der Multikupplung zur Ausbildung einer Kippausgleichseinrichtung vorgesehen ist, wobei die Multikupplung über ein erstes Langloch mit dem ersten Haltearm und über ein zweites Langloch mit dem zweiten Haltearm zur Ausbildung der Schrägausgleicheinrichtung lagerbar ist.

Durch die bewegbare Befestigung der Multikupplung mit dem Haltegestell kann ein anzukoppelndes bewegliches Teil, insbesondere ein Chemieanlagencontainer zur Aufnahme und/oder verfahrenstechnischer Behandlung von in Chemieanlagen auftretenden Stoffen und/oder Stoffgemischen beispielsweise Durchführung einer chemischen Reaktion oder eines verfahrenstechnischen Prozesses, mit einem im Wesentlichen unbeweglichen Teil, beispielsweise einer Versorgungsanlage zur Bereitstellung von Edukten und Aufnahme von Produkten, oder einem ebenfalls beweglichen Teil einfach gekuppelt werden, da Schrägstellungen und/oder Versätze durch das Haltegestell ausgeglichen werden können. Der Chemieanlagencontainer kann insbesondere feste, flüssig und/oder gasförmige Stoffe oder Stoffgemische aufnehmen, die einphasig oder mehrphasig, beispielsweise als Suspension oder Emulsion, vorliegen. Der Chemieanlagencontainer kann insbesondere eine verfahrenstechnische Prozesstechnik, beispielsweise zum Heizen und/oder Kühlen und/oder Vermischen und/oder Trennen und/oder Druckregelen und/oder Belüften und/oder Entlüften aufweisen, die es vorzugsweise ermöglicht in dem Chemieanlagencontainer eine chemische Reaktion durchzuführen und beabsichtigte Reaktionsbedingungen zu regeln. Beispielsweise kann ein Chemieanlagencontainer von einem LKW zu einer Versorgungsanlage transportiert werden, wo die Edukte für eine innerhalb des Chemieanlagencontainers durchzuführenden chemischen Reaktion eingefüllt werden können und/oder nach Durchführung der chemischen Reaktion vorliegende Produkte entleert werden können. Eine unpräzise Positionierung und/oder Ausrichtung des LKWs und/oder des von dem LKW transportierten Chemieanlagencontainers kann mit Hilfe des Haltegestells ausgeglichen werden. Ferner ist es möglich auch während eines Befüllens oder Entleerens erfolgendes Absenken oder Erhöhen der Position des Chemieanlagencontainers vorzugsweise automatisch auszugleichen, das infolge des sich verändernden Gewichts des Chemieanlagencontainers durch ein Einfedern oder Ausfedern des Chemieanlagencontainers in Stossdämpfer oder andere Dämpfer- und/oder Federelement auftreten kann. Es kann vermieden werden, dass ein sperriges und/oder schweres bewegliches Teil umständlich ausgerichtet werden muss, um eine Koppelung herbeizuführen. Dadurch ist ein einfaches Kuppeln einer Multikupplung ermöglicht.

Die Montageeinrichtung kann beispielsweise als ein Bauteil ausgestaltet sein, dass mit einer größeren Baueinheit stationär lösbar oder unlösbar verbunden werden kann. Die Montageeinrichtung kann mit einem Untergrund 21 und/oder einer Wand eines Gebäudes, insbesondere Versorgungsanlage, oder einer Wand einer transportablen Baueinheit, insbesondere Chemieanlagencontainer, verbunden sein. Die Multikupplung kann beispielsweise eine Halteplatte aufweisen, mit der die mindestens eine Kupplung verbunden ist, wobei die Kupplung die Halteplatte durchdringt. Die Multikupplung kann mindestens eine Kupplung aufweisen, wobei die Multikupplung insbesondere mehrere Kupplungen, insbesondere Steckverbinder, aufweist. Mit Hilfe der jeweiligen Kupplung kann insbesondere eine hydraulische und/oder eine pneumatische und/oder eine elektrische Koppelung mit einer korrespondierenden Kupplung herbeigeführt werden. Die miteinander koppelbaren Kupplungen sind insbesondere als eine männliche Kupplung, die in eine weibliche Kupplung einsteckbar ist, ausgeführt, wobei die männliche Kupplung mit der mit dem Haltegestell bewegbar verbundenen Multikupplung und die weibliche Kupplung mit der hierzu korrespondierenden Multikupplung oder umgekehrt verbunden sein kann. Vorzugsweise sind mehrere Ausgleichseinrichtung vorgesehen, die jeweils unterschiedliche definierte Verschiebungen und/oder Verschwenkungen der Multikupplung ermöglichen. Die jeweilige Verschiebung der jeweiligen Ausgleichseinrichtung kann beispielsweise im Wesentlichen exakt vertikal oder im Wesentlichen exakt horizontal erfolgen. Es ist auch möglich, dass eine Verschiebung schräg zur Horizontalen und schräg zur Vertikalen mit einem Bewegungsanteil in horizontaler Richtung und einen Bewegungsanteil in vertikaler Richtung erfolgt. Entsprechend kann die jeweilige Verschwenkung der jeweiligen Ausgleichseinrichtung beispielsweise um eine Drehachse erfolgen, die im Wesentlichen exakt vertikal oder im Wesentlichen exakt horizontal verläuft. Es ist auch möglich, dass die Drehachse schräg zur Horizontalen und schräg zur Vertikalen verläuft. Der maximale Verschiebeweg einer linearen Bewegung und/der der maximale Winkelbetrag einer Drehung einer Ausgleichseinrichtung kann insbesondere mit Hilfe eines entsprechenden vorzugsweise gedämpften und/oder gefederten Anschlags begrenzt sein.

Insbesondere ist als mindestens eine weitere Ausgleichseinrichtung
- eine Linearausgleichseinrichtung zur linearen Verschiebung der Multikupplung entlang einer designierten, insbesondere im Wesentlichen horizontalen, Kontaktrichtung zum Verbindung einer männlichen Kupplung mit einer weiblichen Kupplung und/oder
- eine Hubausgleichseinrichtung zur linearen, insbesondere im Wesentlichen vertikalen, Verschiebung der Multikupplung quer zu einer designierten, insbesondere im Wesentlichen horizontalen, Kontaktrichtung zum Verbindung einer männlichen Kupplung mit einer weiblichen Kupplung und/oder
- eine Querausgleichseinrichtung zum linearen, insbesondere im Wesentlichen horizontalen, Versetzen der Multikupplung quer zu einer designierten, insbesondere im Wesentlichen horizontalen, Kontaktrichtung zum Verbindung einer männlichen Kupplung mit einer weiblichen Kupplung und/oder die Kippausgleichseinrichtung zum Verschwenken der Multikupplung um eine, insbesondere im Wesentlichen horizontal, quer zu einer designierten, insbesondere im Wesentlichen horizontalen, Kontaktrichtung zum Verbindung einer männlichen Kupplung mit einer weiblichen Kupplung verlaufende Kippdrehachse und/oder
- eine Drehausgleicheinrichtung zum Drehen der Multikupplung um eine, insbesondere im Wesentlichen horizontalen, Kontaktrichtung zum Verbindung einer männlichen Kupplung mit einer weiblichen Kupplung verlaufende Drehungsdrehachse vorgesehen.
Insbesondere sind mehrere einzelne Ausgleichseinrichtungen vorgesehen, die unabhängig voneinander betätigbar sind und die derart miteinander gekoppelt sind, dass sich die einzelnen Ausgleichsbewegungen der Ausgleichseinrichtungen überlagern. Ferner ist es möglich durch eine einzige Konstruktive Umsetzung zwei oder mehr Ausgleichseinrichtungen gleichzeitig auszubilden. Der besondere technische Vorteil der Verwendung von zwei oder mehr Ausgleichseinrichtungen an einer Multikupplung ist, dass die Multikupplung sehr viel flexibler und anpassungsfähiger Positionsungenauigkeiten eines an die Multikupplung zu kuppelnden Chemieanlagencontainers ausgleichen kann. Dies ermöglicht eine einfachere und effizientere Handhabung eines an die Multikupplung zu kuppelnden Containers, da der Container für eine direkte Kupplung nur grob positioniert abgestellt werden muss und nicht exakt positioniert werden muss, weil leichte Positionsungenauigkeiten durch die Multikupplung ausgeglichen werden können.

Bei der designierten Kontaktrichtung handelt es sich insbesondere um eine Bewegungsrichtung, die eine zu der mit dem Haltegestell verbundenen Multikupplung korrespondierende Multikupplung ausführen muss, um die beiden Multikupplungen miteinander zu koppeln, indem eine männliche Kupplung in eine weibliche Kupplung eingesteckt wird. Die designierte Bewegungsrichtung entspricht im Wesentlichen der Ausrichtung der mindestens einen Kupplung der Multikupplung. Vorzugsweise ist die designierte Bewegungsrichtung im Wesentlichen horizontal ausgerichtet, so dass ein Chemieanlagencontainer mit Hilfe eines geeigneten Fahrzeugs an eine stationäre Versorgungsanlage über die von dem Haltegestell bewegbar aufgenommene Multikupplung angedockt werden kann. Durch die einzelnen Ausgleichseinrichtungen können Versätze und/oder Verkippungen ausgeglichen werden. Die Einzelnen Ausgleichseinrichtungen können beispielsweise von Hand betätigt werden. Es ist aber auch möglich mit einer geeigneten Sensorik, beispielsweise mit Hilfe optischer und/oder elektromagnetischer Sensoren zur Detektion der Position und Lage der anzudockenden Multikupplung relativ zur vor dem Haltegestell aufgenommenen Multikupplung, die Anordnung der anzudockenden Multikupplung relativ zur vor dem Haltegestell aufgenommenen Multikupplung im Raum zu ermitteln und die einzelnen Ausgleichseinrichtungen mit Hilfe einer hierzu vorgesehenen Regler automatisch zu betätigen. Dies ermöglicht es ohne großen Ausrichtaufwand beispielsweise einen Chemieanlagencontainer an die von dem Haltegestell aufgenommene Multikupplung anzudocken. Mit Hilfe der einzelnen Ausrichteinrichtungen können insbesondere die miteinander zu koppelnden Multikupplungen vorzugsweise automatisch zueinander parallel und fluchtend ausgerichtet werden. Eine Beschädigung eine der Multikupplungen beim Andocken wird dadurch vermieden.

Vorzugsweise weist die Linearausgleichseinrichtung mindestens einen in einer Führungsschiene geführten Gleitschuh zur linearen Verschiebung der Multikupplung auf, wobei insbesondere die Führungsschiene durch die Montageeinrichtung ausgebildet ist. Der maximale Verschiebeweg des Gleitschuhs kann durch einen vorzugsweise gedämpften und/oder gefederten Rammschutz begrenzt sein. Durch den von der Führungsschiene geführten Gleitschuh kann eine Linearbewegung entlang der Kontaktrichtung vorgegeben werden. Beispielsweise ist die Montageeinrichtung mit einem Untergrund verbindbar und bildet an der vom Untergrund wegweisenden Seite die Führungsschiene aus. Insbesondere ist der Gleitschuh mit der Führungsschiene arretierbar, so dass über diese Arretierung in Kontaktrichtung auftretende Kräfte abgetragen werden können. Vorzugsweise sind ein in einer ersten Führungsschiene erster Gleitschuh und ein in einer zweiten Führungsschiene geführter zweiter Gleitschuh vorgesehen, so dass das Gewicht und die auftretenden Kräfte besser verteilt werden können. Der erste Gleitschuh und der zweite Gleitschuh können über einen Querträger starr miteinander verbunden sein. Es ist aber auch möglich durch eine geeignete Verbindung den ersten Gleitschuh und den zweiten Gleitschuh zumindest um eine begrenzte Strecke unterschiedlich stark entlang der Führungsschienen zu verschieben, so dass durch die unterschiedliche Verschiebung der Gleitschuhe ein Verschwenken der Multikupplung um eine insbesondere vertikale Drehachse zum Ausgleich einer Schrägstellung erfolgen kann. Die Linearausgleicheinrichtung kann dadurch gleichzeitig die Schrägausgleicheinrichtung ausbilden.

Besonders bevorzugt weist die Hubausgleichseinrichtung eine, insbesondere als Spindelantrieb ausgestalteten, erste Linearverstellung zur linearen Verschiebung der Multikupplung und eine, insbesondere als Spindelantrieb ausgestalteten, zweite Linearverstellung zur linearen Verschiebung der Multikupplung auf, wobei insbesondere die erste Linearverstellung unabhängig von der zweiten Linearverstellung zur Bereitstellung einer Drehung der Multikupplung betätigbar ist. Alternativ ist es möglich, dass die Hubausgleicheinrichtung nur genau eine, vorzugsweise als Spindelantrieb ausgestaltete Linearverstellung aufweist. Durch die Linearverstellung kann insbesondere ein Hubversatz in vertikaler ausgeglichen werden. Durch die zwei Linearverstellungen können auftretende Kräfte besser verteilt werden. Durch die zwei unabhängig von einander betätigbaren Linearverstellungen können die Linearverstellungen um eine unterschiedliche Wegstrecke verstellt werden, wodurch eine Drehung der Multikupplung um eine insbesondere im wesentlichen horizontale Drehachse entlang der Kontaktrichtung erreicht werden kann. Die Hubausgleichseinrichtung kann dadurch gleichzeitig die Drehausgleicheinrichtung ausbilden.

Erfindungsgemäß ist ein erster Haltearm zur schwenkbaren Lagerung der Multikupplung und ein zweiter Haltearm zur schwenkbaren Lagerung der Multikupplung zur Ausbildung der Kippausgleichseinrichtung vorgesehen, wobei insbesondere die Multikupplung über ein erstes Langloch mit dem ersten Haltearm und über ein zweites Langloch mit dem zweiten Haltearm zur Ausbildung der Schrägausgleicheinrichtung lagerbar ist. Vorzugsweise weist die Multikupplung abstehende Lagerbolzen auf, die an einander gegenüberliegenden Seiten von den Haltearmen schwenkbar gelagert sind. Durch eine konstruktiv einfach umzusetzende Maßnahme kann ein Kippausgleich um eine insbesondere horizontale quer zu Kontaktrichtung verlaufende Drehachse erfolgen. Durch die Langlöcher ist es möglich, dass die Lagerbolzen in den Langlöchern einen Versatz entlang der Kontaktrichtung ausführen, beispielsweise um als Linearausgleichseinrichtung einen Ausgleich entlang der Kontaktrichtung zu ermöglichen. Besonders bevorzugt werden die Lagerbolzen in den Langlöchern in unterschiedliche Richtungen bewegt, um als Schrägausgleicheinrichtung einen Ausgleich einer Schrägstellung zu ermöglichen. Der besondere technische Vorteil der Verwendung einer Schrägausgleicheinrichtung an einer Multikupplung ist, dass die Multikupplung sehr viel flexibler und anpassungsfähiger Positionsungenauigkeiten eines an die Multikupplung zu kuppelnden Chemieanlagencontainers ausgleichen kann. Dies ermöglicht eine einfachere und effizientere Handhabung eines an die Multikupplung zu kuppelnden Containers, da der Container für eine direkte Kupplung nur grob positioniert abgestellt werden muss und nicht exakt positioniert werden muss, weil leichte Positionsungenauigkeiten durch die Multikupplung ausgeglichen werden können. Besonders ausgeprägt ist dieser technische Vorteil, wenn durch eine einzige konstruktive Umsetzung zwei oder mehr Ausgleichseinrichtungen gleichzeitig verwendet werden. Beispielsweise ist ein großer Chemieanlagencontainer nicht auf den Millimeter genau an einem bestimmten Platz abzustellen. Es wird beim Abstellen des Containers regelmäßig Positionsungenauigkeiten im Zentimeterbereich geben. Eine Feinausrichtung des Containers relativ zu der Multikupplung wäre kompliziert, wenig effizient und zeitaufwändig. Die Verwendung von einer, zwei oder mehr Ausgleichseinrichtungen, insbesondere einer Schrägausgleichseinrichtung, erlaubt es vorteilhafterweise, den Container grob positioniert abzustellen und direkt an die Multikupplung zu kuppeln. Dabei werden Positionsungenauigkeiten durch eine, zwei oder mehr Ausgleichseinrichtungen, insbesondere eine Schrägausgleichseinrichtung, ausgeglichen.

Die Erfindung betrifft ferner eine Andockstation zum Andocken eines Chemieanlagencontainers mit einer Versorgungsanlage, mit einem Haltegestell, das wie vorstehend beschrieben aus- und weitergebildet sein kann und einer bewegbar von dem Haltegestell aufgenommenen mindestens eine Kupplung aufweisenden Multikupplung. Mit Hilfe des Haltegestells ist ein einfaches Kuppeln einer Multikupplung ermöglicht. Die Andockstation kann insbesondere beispielsweise als Industriestandard standardisiert werden, so dass viele verschiedene Chemieanlagencontainer mit Hilfe der gleichen Andocktechnik mit verschiedenen Versorgungsanlagen und/oder verfahrenstechnischen Anlagen gekoppelt werden können. Dies ermöglicht eine übergreifende Kompatibilität, die insbesondere innerhalb einer Chemieanlage mit mehreren Versorgungsanlagen und/oder verfahrenstechnischen Anlagen gegeben ist und eine Austauschbarkeit standardisierter Komponenten ermöglicht, wobei diese Kompatibilität vorzugsweise auch außerhalb einer abgegrenzten Chemieanlage, insbesondere weltweit, erreichbar ist. Die Andockstation kann insbesondere für eine Vielzahl unterschiedlicher Anwendungsbereiche verwendet werden, bei denen ein Stofftransport über die Multikupplung erfolgen kann.

Die Erfindung betrifft ferner eine Andockstation zum Andocken eines Chemieanlagencontainers mit einer Versorgungsanlage, mit einem Haltegestell, das wie vorstehend beschrieben aus- und weitergebildet sein kann, einer bewegbar von dem Haltegestell aufgenommenen mindestens eine Verbindungskupplung aufweisenden Multikupplung und mindestens einen mit der Verbindungskupplung der Multikupplung verbundenen Förderschlauch, wobei der Förderschlauch an dem von der Verbindungskupplung wegweisenden Ende mit einer relativ zur Montageeinrichtung des Haltegestells stationär positionierten Schlauchkupplung verbunden ist, wobei der Förderschlauch zwischen der Schlauchkupplung und der Verbindungskupplung zumindest in einem Teilbereich einen bogenförmigen, insbesondere im Wesentlichen halbreisförmigen, Verlauf zum Ausgleich von Positionsänderungen und/oder Lageänderungen der Multikupplung relativ zur Montageeinrichtung aufweist. Mit Hilfe des Haltegestells ist ein einfaches Kuppeln einer Multikupplung ermöglicht. Durch den bogenförmigen Verlauf des Förderschlauchs kann der Förderschlauch durch eine einfache Änderung seines Krümmungsradius der Relativbewegung der Multikupplung zur Montageeinrichtung folgen. Ein Knicken, Beschädigen oder übermäßig schneller Verschleiß des Förderschlauchs ist vermieden. Insbesondere kann der Fördeschlauch versteift und/oder verstärkt sein, um höhere Drücke von 2 bar, insbesondere 10 bar, vorzugsweise 20 bar und besonders bevorzugt 50 bar stand halten zu können, ohne dass durch das Ausrichten der Multikupplung, mit welcher der Förderschlauch verbunden ist, die Verstärkungselemente des Förderschlauchs beschädigt werden können. Vorzugsweise ist der Förderschlauch abweichend von der Kontaktrichtung, insbesondere im Wesentlichen in horizontaler Richtung quer zur Kontaktrichtung mit der Verbindungskupplung der Multikupplung verbunden. Insbesondere wenn der Förderschlauch mit der Schlauchkupplung, die vorzugsweise in Kontaktrichtung im Wesentlichen gegenüberliegend zu der Verbindungskupplung der Multikupplung positioniert ist, ebenfalls insbesondere im Wesentlichen in horizontaler Richtung quer zur Kontaktrichtung verbunden ist, ergibt sich für den Förderschlauch ein im Wesentlichen bogenförmiger beziehungsweise teilkreisförmiger Verlauf. Der im Wesentlichen bogenförmige Verlauf des Förderschlauchs bedingt den technischen Vorteil, dass der Förderschlauch einem im Vergleich zu Torsionsbewegungen sehr viel geringeren Beanspruchungsprofil ausgesetzt ist. Der bogenförmige, insbesondere im Wesentlichen halbkreisförmige, Verlauf des Förderschlauchs, ohne oder nur mit sehr geringer Torsion vermeidet ein Knicken, Beschädigen oder übermäßigen Verschleiß des Förderschlauchs. Dadurch hat der Förderschlauch eine sehr viel längere Lebensdauer, da eine stärkere Beanspruchung von Förderschläuchen durch Mehrfachbiegungen und gleichzeitige starke Torsion, die ja erfindungsgemäß vermieden wird, zu einem starken Verschleiß und frühzeitigem Versagen von Förderschläuchen führen kann.

Der im Wesentlichen bogenförmige, insbesondere im Wesentlichen halbkreisförmige, Verlauf des Förderschlauchs kann liegend und/oder geneigt, insbesondere im Verhältnis zur horizontalen Ebene geneigt ausgeführt sein, so dass im Förderschlauch befindliche Flüssigkeiten zurück zur Quelle der Flüssigkeit laufen und nicht im hängenden Schlauch stehen bleiben und beim Anfahren als Flüssigkeitspfropfen die Anlage beschädigen können. Dadurch weist der im Wesentlichen bogenförmige Verlauf des Förderschlauches, der gleichzeitig liegend und/oder geneigt ausgeführt ist, sowohl den technischen Vorteil der Vermeidung von Verschleiß des Schlauches als auch den technischen Vorteil der Vermeidung von Flüssigkeitsrückständen im Förderschlauch auf.

Die Erfindung betrifft ferner eine Andockstation zum Andocken eines Chemieanlagencontainers mit einer Versorgungsanlage, mit einem Haltegestell, das wie vorstehend beschrieben aus- und weitergebildet sein kann, einer bewegbar von dem Haltegestell aufgenommenen mindestens eine Verbindungskupplung aufweisenden Multikupplung und mindestens einen mit der Verbindungskupplung der Multikupplung verbundenen Förderschlauch, wobei der Förderschlauch an dem von der Verbindungskupplung wegweisenden Ende mit einer relativ zur Montageeinrichtung des Haltegestells stationär positionierten Schlauchkupplung verbunden ist, wobei der Förderschlauch von der Schlauchkupplung zu der Verbindungskupplung entgegen der Schwerkraftrichtung ansteigend verläuft. Mit Hilfe des Haltegestells ist ein einfaches Kuppeln einer Multikupplung ermöglicht. Durch den ansteigenden Verlauf des Förderschlauchs von der Schlauchkupplung zu der Verbindungskupplung der Multikupplung können nach einem Befüllen oder Entleeren innerhalb des Förderschlauchs vorliegende Flüssigkeiten von der Verbindungskupplung der Multikupplung wegfließen. Insbesondere können nach einem Befüllen oder Entleeren in dem Förderschlauch niederschlagende Kondensate von der Verbindungskupplung der Multikupplung fern gehalten werden. Dadurch kann ein Austreten von Flüssigkeiten beim Andocken an die Multikupplung vermieden werden. Die Steigung beträgt insbesondere mindestens 1%, vorzugsweise mindestens 2%, weiter bevorzugt mindestens 3% und besonders bevorzugt mindestens 5%. Die Steigung kann insbesondere maximal 10% betragen.

Insbesondere ist ein Schlauchablagegestell mit einer Führungsöffnung zum Hindurchführung des mindestens einen Förderschlauchs vorgesehen, wobei die Führungsöffnung eine Bewegbarkeit des Förderschlauchs in Schwerkraftrichtung begrenzt und/oder eine Bewegbarkeit des Förderschlauchs quer zur Schwerkraftrichtung zum Ausgleich von Positionsänderungen und/oder Lageänderungen der Multikupplung relativ zur Montageeinrichtung vorsieht. Die Führungsöffnung des Schlauchablagegestells ist insbesondere zu der Schlauchkupplung und der Verbindungskupplung der Multikupplung beabstandet, so dass ein Durchhängen des Förderschlauchs vermieden werden kann. Gleichzeitig kann zumindest in einem Teilbereich ein ansteigender Verlauf des Förderschlauchs gewährleistet werden. Die Führungsöffnung des Schlauchablagegestells kann in horizontaler Richtung so breit ausgeführt sein, dass der Förderschlauch durch eine Variation seines Krümmungsradius der Relativbewegung der Multikupplung folgen kann ohne an einer seitlichen Begrenzung der Führungsöffnung umgeknickt und/oder gequetscht zu werden.

Die Erfindung betrifft ferner eine Versorgungsanlage zur Bereitstellung von Edukten und/oder Aufnahme von Produkten, wobei die Versorgungsanlage eine von einem Haltegestell, das wie vorstehend beschrieben aus- und weitergebildet sein kann, bewegbar aufgenommene mindestens eine Kupplung aufweisenden Multikupplung und/oder eine Andockstation, die wie vorstehend beschrieben aus- und weitergebildet sein kann, aufweist. Mit Hilfe des Haltegestells ist ein einfaches Kuppeln einer Multikupplung ermöglicht.

Die Erfindung betrifft ferner einen Chemieanlagencontainer zur Aufnahme und/oder verfahrenstechnischer Behandlung von in Chemieanlagen auftretenden Stoffen und/oder Stoffgemischen, mit einer von einem ersten Haltegestell, das wie vorstehend beschrieben aus- und weitergebildet sein kann, bewegbar aufgenommenen mindestens eine Kupplung aufweisenden ersten Multikupplung und/oder einer ersten Andockstation, die wie vorstehend beschrieben aus- und weitergebildet sein kann, wobei insbesondere eine von einem zweiten Haltegestell, das wie vorstehend beschrieben aus- und weitergebildet sein kann, bewegbar aufgenommenen mindestens eine Kupplung aufweisenden zweite Multikupplung und/oder eine zweite Andockstation, die wie vorstehend beschrieben aus- und weitergebildet sein kann, vorgesehen ist. Der Chemieanlagencontainer kann insbesondere feste, flüssig und/oder gasförmige Stoffe oder Stoffgemische aufnehmen, die einphasig oder mehrphasig, beispielsweise als Suspension oder Emulsion, vorliegen. Der Chemieanlagencontainer kann insbesondere eine verfahrenstechnische Prozesstechnik, beispielsweise zum Heizen und/oder Kühlen und/oder Vermischen und/oder Trennen und/oder Druckregelen und/oder Belüften und/oder Entlüften aufweisen, die es vorzugsweise ermöglicht in dem Chemieanlagencontainer eine chemische Reaktion durchzuführen und beabsichtigte Reaktionsbedingungen zu regeln. Der Chemieanlagencontainer kann insbesondere zur Durchführung von Batch-Reaktionen verwendet werden. Hierzu kann der Chemieanlagencontainer an einer Versorgungsanlage angedockt werden, um Edukte in den Chemieanlagencontainer einzufüllen. Nach dem Ende der Batch-Reaktion oder bei Erreichung einer hinreichend geringen vordefinierten Umsatzgeschwindigkeit können die bei der chemischen Reaktion entstandenen Produkte aus dem Chemieanlagencontainer über die angedockte Mulikupplung entleert werden. Wenn der Chemieanlagencontainer mindestens zwei Multikupplungen beziehungsweise Andockstationen aufweist ist auch eine kontinuierliche Reaktion möglich, indem über die erste Multikupplung die Edukte insbesondere kontinuierlich oder quasi-kontinuierlich eingefüllt und über die zweite Multikupplung die entstandenen Produkte insbesondere kontinuierlich oder quasi-kontinuierlich entleert werden. Insbesondere ist es möglich mehrere Chemieanlagencontainer über die zueinander korrespondierenden Multikupplungen in Reihe zu schalten, so dass sich eine mehrstufige im Wesentlichen kontinuierliche chemische Reaktion oder verfahrenstechnischer Prozess erreichen lässt. In der vorstehend beschriebenen Ausführungsform der Erfindung können beispielsweise zwei Chemieanlagencontainer untereinander verbunden werden, wobei auftretende Positionierungsungenauigkeiten zwischen den Containern durch eine oder mehrere Ausgleichsvorrichtungen ausgeglichen werden können. Auf diese Weise lassen sich dann zwei oder mehrerer Container untereinander kuppeln. Beispielsweise kann das Haltegestell mehr als eine Multikupplung 14 zum Kuppeln von mehr als einem Container aufweisen.

Die Erfindung betrifft ferner eine Andocksystem zum Befüllen und/oder Entleeren eines Chemieanlagencontainers, mit einer Versorgungsanlage zur Bereitstellung von Edukten und Aufnahme von Produkten, wobei die Versorgungsanlage eine von einem Haltegestell, das wie vorstehend beschrieben aus- und weitergebildet sein kann, bewegbar aufgenommenen mindestens eine Kupplung aufweisenden Multikupplung und/oder eine Andockstation, die wie vorstehend beschrieben aus- und weitergebildet sein kann, und einem Chemieanlagencontainer zur Aufnahme und/oder verfahrenstechnischer Behandlung von in Chemieanlagen auftretenden Stoffen und/oder Stoffgemischen, der insbesondere wie vorstehend beschrieben aus- und weitergebildet sein kann, wobei der Chemieanlagencontainer eine von einem Haltegestell, das wie vorstehend beschrieben aus- und weitergebildet sein kann, bewegbar aufgenommenen mindestens eine Kupplung aufweisenden Multikupplung und/oder eine Andockstation, die wie vorstehend beschrieben aus- und weitergebildet sein kann, wobei die Multikupplung der Versorgungsanlage mit der Multikupplung des Chemieanlagencontainers lösbar kuppelbar ist. Mit Hilfe des Haltegestells ist ein einfaches Kuppeln der Multikupplungen ermöglicht. Insbesondere können auch während eines Befüllens oder Entleerens entstehende Lageveränderungen ausgeglichen werden.

Grundsätzlich können das oben beschriebene erfindungsgemäße Haltegestell, die erfindungsgemäße Andockstation, der erfindungsgemäße Chemieanlagencontainer, sowie das oben beschriebene erfindungsgemäße Andocksystem gemäß den "ATEX" EU-Richtlinien konstruiert und gebaut sein (EU-Richtlinien 94/9/EG und 1992/92/EG zum Explosionsschutz). Das bedeutet insbesondere, dass alle Flächen in den geforderten Grenzen elektrisch ableitfähig sein können und über eine ausreichende elektrische Erdung verfügen können. Zudem kann das erfindungsgemäße Haltegestell aus Stahl und nicht aus Aluminium gefertigt sein. Aluminium in Kombination mit korrodiertem Eisen kann Schlagfunken erzeugen, was im Rahmen eines verbesserten Explosionsschutzes vermieden werden sollte. Dies darf bei einer Konstruktion, welche in einem EX-Bereich betreiben werden soll, nicht auftreten. Für den Einsatz der Erfindung im Chemiebereich ist daher eine ATEX-Zulassung von großem Vorteil. Gerade in Chemiebetreiben werden häufig brennbare, leichtentzündliche Stoffe eingesetzt, die im richtigen Mischungsverhältnis mit Umgebungsluft explosionsgefährdete Gemische bilden. Um die Erfindung in einem solchen Umfeld einsetzen zu können, ist eine ATEX-Zulassung gesetzlich gefordert. Daher kann in einer Ausführungsform der Erfindung das erfindungsgemäße Haltegestell, die erfindungsgemäße Andockstation, der erfindungsgemäße Chemieanlagencontainer, sowie das oben beschriebene erfindungsgemäße Andocksystem gemäß den "ATEX" EU-Richtlinien konstruiert und gebaut sein, um auch in einem explosionsgefährdeten Bereich einsetzbar zu sein.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische perspektivische Ansicht einer Andockstation,
- Fig. 2:: eine schematische Seitenansicht der Andockstation aus Fig. 1,
- Fig. 3:: eine schematische perspektivische Detailansicht einer Andockstation,
- Fig. 4:: eine schematische Draufsicht auf Förderschläuche der Andockstation aus Fig. 3,
- Fig. 5:: eine schematische Draufsicht der Andockstation aus Fig. 3 und
- Fig. 6:: eine schematische Seitenansicht der Andockstation aus Fig. 3.

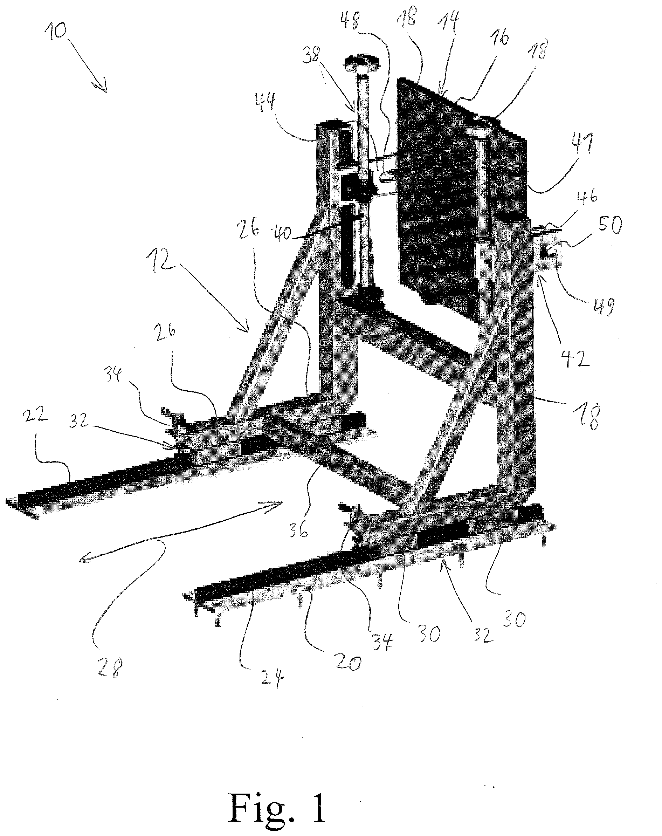

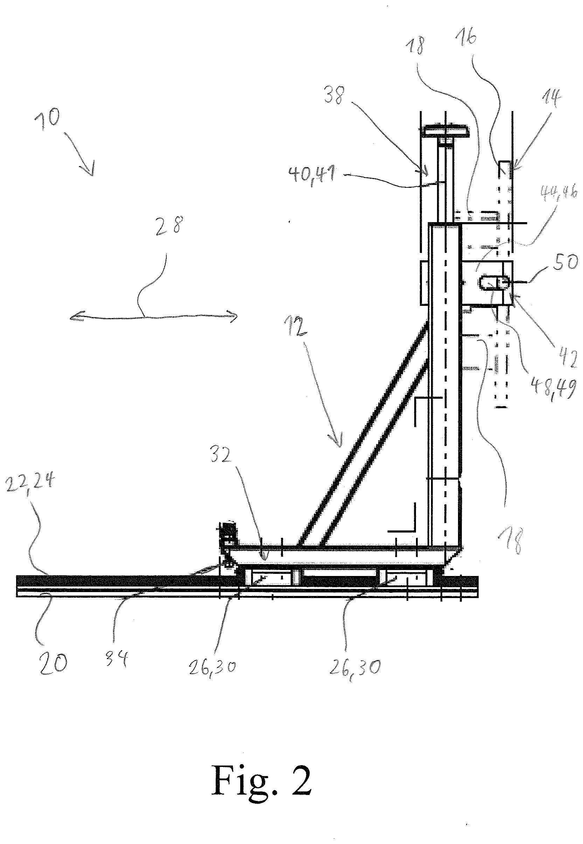

Die in Fig. 1 und Fig. 2 dargestellte Andockstation 10 weist eine von einem Haltegestell 12 bewegbar gehaltene Multikupplung 14 auf. Die Multikupplung 14 weist eine Halteplatte 16 auf, die von mehreren verschiedenartigen Kupplungen 18 durchdrungen ist. Die Andockstation 10 kann über eine Montageeinrichtung 20 beispielsweise mit einem Untergrund 21 einer Versorgungsanlage oder mit einer Wand und/oder einen Boden eines Chemieanlagencontainers fest verbunden werden. Die Montageeinrichtung 20 bildet eine erste Führungsschiene 22 und eine zweite Führungsschiene 24 aus. Mit der ersten Führungsschiene 22 sind zwei erste Gleitschuhe 26 entlang einer im Wesentlichen horizontal verlaufenden Kontaktrichtung 28 linear geführt. Entsprechend sind mit der zweiten Führungsschiene 24 zwei zweite Gleitschuhe 30 entlang der Kontaktrichtung 28 linear geführt. Die Führungsschienen 22, 24 und die Gleitschuhe 26, 30 bilden eine Linearausgleichseinrichtung 32 aus, mit deren Hilfe eine Relativlage der Multikupplung 14 zur Montageeinrichtung 20 eingestellt werden kann. Die Gleitschuhe 26, 30 können mit Hilfe von Arretiereinrichtungen 34 in einer beabsichtigten Position arretiert werden. Im dargestellten Ausführungsbeispiel sind die ersten Gleitschuhe 26 mit den zweiten Gleitschuhen 30 über einen Querträger 36 starr miteinander gekoppelt.

Die Andockstation 10 weist zusätzlich eine Hubausgleicheinrichtung 38 zum Ausgleich eines Versatzes der Multikupplung 14 in vertikaler Richtung auf, die im dargestellten Ausführungsbeispiel zwei unabhängig voneinander betätigbare erste Linearverstellungen 40 und zweite Linearverstellung 41 in Form von Spindelantrieben aufweist. Durch eine unterschiedliche Betätigung der Linearverstellungen 40, 41 kann die Multikupplung 14 um eine im Wesentlichen horizontale Drehachse entlang der Kontaktrichtung 28 verdreht werden, so dass die Hubausgleichsvorrichtung 38 gleichzeitig eine Drehausgleichseinrichtung zum Drehen der Multikupplung 14 ausbildet.

Mit der Hubausgleicheinrichtung 38 ist eine Kippausgleichseinrichtung 42 verbunden. Die Kippausgleichseinrichtung 42 weist einen mit der ersten Linearverstellungen 40 verbundenen ersten Haltearm 44 und einen mit der zweiten Linearverstellungen 41 verbundenen zweiten Haltearm 46 auf, die ein sich in Kontaktrichtung 28 erstreckendes erstes Langloch 48 beziehungsweise zweites Langloch 49 aufweisen. In den Langlöchern 48, 49 sind mit der Halteplatte 16 der Multikupplung 14 verbundene Lagerbolzen 50 schwenkbar gelagert, so dass die Multikupplung 14 um eine im Wesentlichen horizontale Drehachse quer zur Kontaktrichtung 28 verkippt werden kann. Durch einen Versatz der Lagerbolzen 50 in unterschiedliche Richtungen innerhalb der Langlöcher 48, 49 kann auch eine Schrägstellung der Multikupplung 14 ausgeglichen werden, so dass die Kippausgleichseinrichtung 42 mit Hilfe der Langlöcher 48, 49 gleichzeitig eine Schrägausgleicheinrichtung zum Verschwenken der Multikupplung 14 ausbilden kann. Ferner kann zwischen der Halteplatte 16 der Multikupplung 14 und den Haltearmen 44, 46 ein hinreichend großes Spiel vorgesehen sein, dass die Multikupplung 14 in einer im Wesentlichen horizontalen Richtung quer zur Kontaktrichtung 28 zum Ausgleich eines Querversatzes verschoben werden kann. Die Lagerbolzen 50 weisen hierzu eine ausreichende Länge auf, damit beide Lagerbolzen 50 auch in den seitlichen Extremlagen in beiden Langlöchern 48, 49 der Haltearme 44, 46 aufgenommen bleiben. Die Kippausgleichseinrichtung 42 kann dadurch gleichzeitig eine Querausgleicheinrichtung zum linearen Versetzen der Multikupplung 14 quer zur Kontaktrichtung 28 ausbilden. Das Haltegestell 12 ermöglicht es der Multikupplung 14 in drei unterschiedliche Koordinatenrichtungen linear verschoben zu werden sowie in drei unterschiedliche Winkelrichtungen verdreht zu werden.

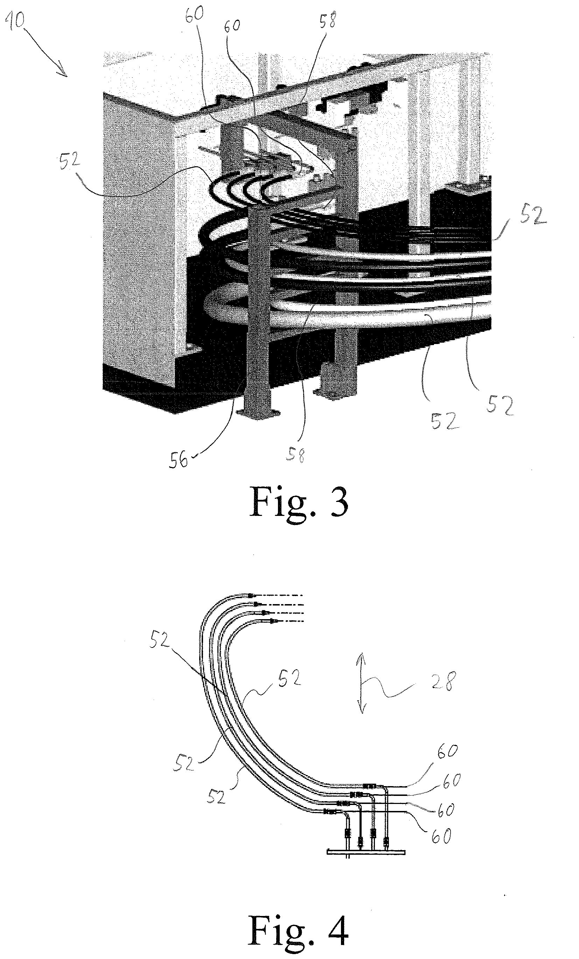

Wie in Fig. 3 dargestellt können mehrere Förderschläuche 52 mit jeweiligen Verbindungskupplungen 54 der Multikupplung 14 verbunden sein. Die Förderschläuche 52 können mit Hilfe eines Haltegestells 56 in einem gebogenen Verlauf in einer definierten Höhe positioniert sein. Hierzu weist das Haltegestell 56 insbesondere mehre Führungsöffnungen 58 auf, um verschiedene Förderschläuche 52 auf unterschiedlichen Höhen zu positionieren. Die Führungsöffnungen 58 lassen eine Verschiebung der Förderschläuche 52 in horizontaler Richtung zu, so dass die Förderschläuche 52 ihren in Fig. 4 dargestellten Krümmungsradius verändern können, um den Bewegungen der Multikupplung 14 bei einem Ausrichten der Multikupplung 14 folgen zu können. Wie in Fig. 4 dargestellt können die Förderschläuche 52 im Wesentlichen quer zur Kontaktrichtung 28 mit den Verbindungskupplungen 54 der Multikupplung und der am zur Verbindungskupplung 52 entgegen gesetzten Ende des Förderschlauchs 52 angeschlossenen Schlauchkupplung 60 verbunden sein, so dass sich im Wesentlichen automatisch ein bogenförmiger Verlauf der Förderschläuche 52 ergibt.

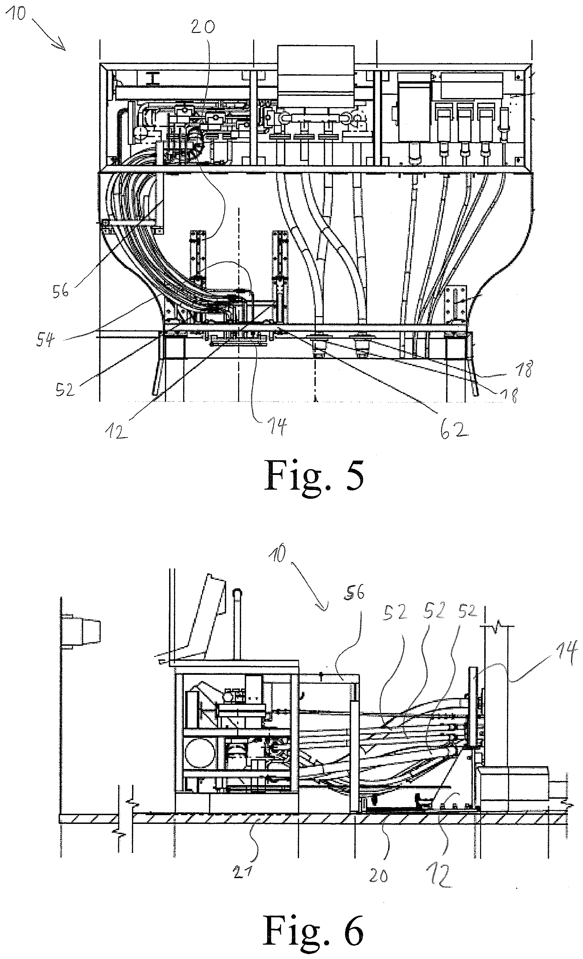

Wie in Fig. 5 dargestellt, kann die von dem Haltegestell 12 gelagerte Multikupplung 14 erforderlichenfalls auch nur einen Teil der herzustellenden Koppelungen bereitstellen. Hierzu kann das Haltegestell 12 mit einem Frontgestell 62 kombiniert sein, mit dem ebenfalls Kupplungen 18, beispielsweise Monoschlauchkupplungen, Elektrostecker oder ähnliches verbunden sein können.

Wie in Fig. 6 dargestellt können die Förderschläuche 52 auf die Multikupplung 14 zu gegenüber einer Horizontalen ansteigend ausgerichtet sein, so dass Flüssigkeiten, die beispielsweise in dem Förderschlauch 52 auskondensiert sind, von der Multikupplung 14 wegfließen.

## Patentansprüche

1. Haltegestell (12) für eine Multikupplung (14) zum Befüllen und/oder Entleeren eines Chemieanlagencontainers, mit
einer Montageeinrichtung (20) zur im Wesentlichen stationären Befestigung des Haltegestells (12)
und mindestens einer mittelbar oder unmittelbar mit der Multikupplung (14) koppelbaren Ausgleichseinrichtung (32, 38, 42) zur Variation einer Position der Multikupplung (14) relativ zur Montageeinrichtung (20) in vertikaler Richtung und/oder in horizontaler Richtung und/oder zur Variation einer Winkellage der Multikupplung (14) relativ zur Montageeinrichtung (20) um eine vertikale und/oder horizontale Drehachse,
wobei die mindestens eine mittelbar oder unmittelbar mit der Multikupplung (14) koppelbare Ausgleichseinrichtung (32, 38, 42) eine Schrägausgleicheinrichtung ist zum Verschwenken der Multikupplung (14) um eine, insbesondere im Wesentlichen vertikal, quer zu einer designierten, insbesondere im Wesentlichen horizontalen, Kontaktrichtung (28) zum Verbindung einer männlichen Kupplung mit einer weiblichen Kupplung verlaufende Schrägachse
**dadurch gekennzeichnet, dass**
ein erster Haltearm (44) zur schwenkbaren Lagerung der Multikupplung (14) und ein zweiter Haltearm (46) zur schwenkbaren Lagerung der Multikupplung (14) zur Ausbildung einer Kippausgleichseinrichtung (42) vorgesehen ist, wobei die Multikupplung (14) über ein erstes Langloch (48) mit dem ersten Haltearm (46) und über ein zweites Langloch (49) mit dem zweiten Haltearm (46) zur Ausbildung der Schrägausgleicheinrichtung lagerbar ist.

2. Haltegestell nach Anspruch 1 **dadurch gekennzeichnet, dass** als mindestens eine weitere Ausgleichseinrichtung (32, 38, 42)
eine Linearausgleichseinrichtung (32) zur linearen Verschiebung der Multikupplung (14) entlang einer designierten, insbesondere im Wesentlichen horizontalen, Kontaktrichtung (28) zum Verbindung einer männlichen Kupplung mit einer weiblichen Kupplung, und/oder
eine Hubausgleichseinrichtung (38) zur linearen, insbesondere im Wesentlichen vertikalen, Verschiebung der Multikupplung (14) quer zu einer designierten, insbesondere im Wesentlichen horizontalen, Kontaktrichtung (28) zum Verbindung einer männlichen Kupplung mit einer weiblichen Kupplung, und/oder
eine Querausgleichseinrichtung zum linearen, insbesondere im Wesentlichen horizontalen, Versetzen der Multikupplung (14) quer zu einer designierten, insbesondere im Wesentlichen horizontalen, Kontaktrichtung (28) zum Verbindung einer männlichen Kupplung mit einer weiblichen Kupplung, und/oder
die Kippausgleichseinrichtung (42) zum Verschwenken der Multikupplung (14) um eine, insbesondere im Wesentlichen horizontal, quer zu einer designierten, insbesondere im Wesentlichen horizontalen, Kontaktrichtung (28) zum Verbindung einer männlichen Kupplung mit einer weiblichen Kupplung verlaufende Kippdrehachse, und/oder
eine Drehausgleicheinrichtung zum Drehen der Multikupplung (14) um eine, insbesondere im Wesentlichen horizontalen, Kontaktrichtung (28) zum Verbindung einer männlichen Kupplung mit einer weiblichen Kupplung verlaufende Drehungsdrehachse
vorgesehen ist.

3. Haltegestell nach Anspruch 2 **dadurch gekennzeichnet, dass** die Linearausgleichseinrichtung (32) mindestens einen in einer Führungsschiene (22, 24) geführten Gleitschuh (26, 30) zur linearen Verschiebung der Multikupplung (14) aufweist, wobei insbesondere die Führungsschiene (22, 24) durch die Montageeinrichtung (20) ausgebildet ist.

4. Haltegestell nach Anspruch 2 oder 3 **dadurch gekennzeichnet, dass** die Hubausgleichseinrichtung (38) eine, insbesondere als Spindelantrieb ausgestalteten, erste Linearverstellung (40) zur linearen Verschiebung der Multikupplung (14) und eine, insbesondere als Spindelantrieb ausgestalteten, zweite Linearverstellung (41) zur linearen Verschiebung der Multikupplung (14) aufweist, wobei insbesondere die erste Linearverstellung (40) unabhängig von der zweiten Linearverstellung (41) zur Bereitstellung einer Drehung der Multikupplung (14) betätigbar ist.

5. Andockstation zum Andocken eines Chemieanlagencontainers mit einer Versorgungsanlage, mit einem Haltegestell (12) nach einem der Ansprüche 1 bis 4, einer bewegbar von dem Haltegestell (12) aufgenommenen mindestens eine Verbindungskupplung (54) aufweisenden Multikupplung (14) und mindestens einen mit der Verbindungskupplung (54) der Multikupplung (14) verbundenen Förderschlauch (52), wobei der Förderschlauch (52) an dem von der Verbindungskupplung (54) wegweisenden Ende mit einer relativ zur Montageeinrichtung (20) des Haltegestells (12) stationär positionierten Schlauchkupplung (60) verbunden ist, wobei der Förderschlauch (52) zwischen der Schlauchkupplung (60) und der Verbindungskupplung (52) zumindest in einem Teilbereich einen bogenförmigen, insbesondere im Wesentlichen halbreisförmigen, Verlauf zum Ausgleich von Positionsänderungen und/oder Lageänderungen der Multikupplung (14) relativ zur Montageeinrichtung (20) aufweist.

6. Andockstation zum Andocken eines Chemieanlagencontainers mit einer Versorgungsanlage, mit einem Haltegestell (12) nach einem der Ansprüche 1 bis 4, einer bewegbar von dem Haltegestell (12) aufgenommenen mindestens eine Verbindungskupplung (54) aufweisenden Multikupplung (14) und mindestens einen mit der Verbindungskupplung (54) der Multikupplung (14) verbundenen Förderschlauch (52), wobei der Förderschlauch (52) an dem von der Verbindungskupplung (54) wegweisenden Ende mit einer relativ zur Montageeinrichtung (20) des Haltegestells (12) stationär positionierten Schlauchkupplung (60) verbunden ist, wobei der Förderschlauch (52) von der Schlauchkupplung (60) zu der Verbindungskupplung (54) entgegen der Schwerkraftrichtung ansteigend verläuft.

7. Andockstation nach Anspruch 5 oder 6 **dadurch gekennzeichnet, dass** ein Schlauchablagegestell (56) mit einer Führungsöffnung (58) zum Hindurchführung des mindestens einen Förderschlauchs (52) vorgesehen ist, wobei die Führungsöffnung (58) eine Bewegbarkeit des Förderschlauchs (52) in Schwerkraftrichtung begrenzt und/oder eine Bewegbarkeit des Förderschlauchs (52) quer zur Schwerkraftrichtung zum Ausgleich von Positionsänderungen und/oder Lageänderungen der Multikupplung (14) relativ zur Montageeinrichtung (20) vorsieht.

8. Chemieanlagencontainer zur Aufnahme und/oder verfahrenstechnischer Behandlung von in Chemieanlagen auftretenden Stoffen und/oder Stoffgemischen, mit einer von einem ersten Haltegestell (12) nach einem der Ansprüche 1 bis 4 bewegbar aufgenommenen mindestens eine Kupplung (18, 54) aufweisenden ersten Multikupplung (14) und/oder einer ersten Andockstation (10) nach einem der Ansprüche 5 bis 7, wobei insbesondere eine von einem zweiten Haltegestell (12) nach einem der Ansprüche 1 bis 4 bewegbar aufgenommenen mindestens eine Kupplung (18, 54) aufweisenden zweite Multikupplung (14) und/oder eine zweite Andockstation (10) nach einem der Ansprüche 5 bis 7 vorgesehen ist.

9. Andocksystem zum Befüllen und/oder Entleeren eines Chemieanlagencontainers, mit einer Versorgungsanlage zur Bereitstellung von Edukten und Aufnahme von Produkten, wobei die Versorgungsanlage eine von einem Haltegestell (12) nach einem der Ansprüche 1 bis 4 bewegbar aufgenommenen mindestens eine Kupplung (18, 54) aufweisenden Multikupplung (14) und/oder eine Andockstation (10) nach einem der Ansprüche 5 bis 7 aufweist, und einem Chemieanlagencontainer zur Aufnahme und/oder verfahrenstechnischer Behandlung von in Chemieanlagen auftretenden Stoffen und/oder Stoffgemischen, insbesondere nach Anspruch 8, wobei der Chemieanlagencontainer eine von einem Haltegestell (12) nach einem der Ansprüche 1 bis 4 bewegbar aufgenommenen mindestens eine Kupplung (18, 54) aufweisenden Multikupplung (14) und/oder eine Andockstation (10) nach einem der Ansprüche 5 bis 7 aufweist, wobei die Multikupplung (14) der Versorgungsanlage mit der Multikupplung (14) des Chemieanlagencontainers lösbar kuppelbar ist.

10. Haltegestell nach einem der Ansprüche 1 bis 4, Andockstation nach einem der Ansprüche 5 bis 7 und Andocksystem nach Anspruch 9, **dadurch gekennzeichnet, dass** das Haltegestell mehr als eine Multikupplung (14) zum Kuppeln von mehr als einem Container aufweist.

11. Haltegestell nach einem der Ansprüche 1 bis 4, Andockstation nach einem der Ansprüche 5 bis 7 und Andocksystem nach Anspruch 9, **dadurch gekennzeichnet, dass** das Haltegestell, die Andockstation und das Andocksystem für den Explosionsschutz ausgelegt sind.

## Claims

1. Holding stand (12) for a multicoupling (14) for filling and/or emptying a chemical plant container, having
a mounting device (20) for the substantially stationary fastening of the holding stand (12) and at least one compensating device (32, 38, 42), couplable indirectly or directly to the multicoupling (14), for varying a position of the multicoupling (14) in relation to the mounting device (20) in the vertical direction and/or in the horizontal direction and/or for varying an angular attitude of the multicoupling (14) in relation to the mounting device (20) about a vertical and/or horizontal axis of rotation,
wherein the at least one compensating device (32, 38, 42), couplable indirectly or directly to the multicoupling (14), is an oblique compensating device for pivoting the multicoupling (14) about an oblique axis, running in particular substantially vertically and running transversely to a designated, in particular substantially horizontal contact direction (28) for connecting a male coupling to a female coupling,
**characterized in that**
a first holding arm (44) for the pivotable mounting of the multicoupling (14) and a second holding arm (46) for the pivotable mounting of the multicoupling (14) for the purpose of forming a tilt compensating device (42) are provided, the multicoupling (14) being mountable by means of the first holding arm (46) via a first long hole (48) and by means of the second holding arm (46) via a second long hole (49) to form the oblique compensating device.

2. Holding stand according to Claim 1, **characterized in that** there is provided as at least one further compensating device (32, 38, 42):
a linear compensating device (32) for the linear displacement of the multicoupling (14) along a designated, in particular substantially horizontal contact direction (28) for connecting a male coupling to a female coupling, and/or
a lift compensating device (38) for the linear, in particular substantially vertical displacement of the multicoupling (14) transversely to a designated, in particular substantially horizontal contact direction (28) for connecting a male coupling to a female coupling, and/or
a transverse compensating device for the linear, in particular substantially horizontal offsetting of the multicoupling (14) transversely to a designated, in particular substantially horizontal contact direction (28) for connecting a male coupling to a female coupling, and/or
the tilt compensating device (42) for pivoting the multicoupling (14) about a tilt axis of rotation running in particular substantially horizontally and running transversely to a designated, in particular substantially horizontal contact direction (28) for connecting a male coupling to a female coupling, and/or
a rotary compensating device for rotating the multicoupling (14) about a rotary axis of rotation running, in particular substantially horizontal, contact direction (28) for connecting a male coupling to a female coupling.

3. Holding stand according to Claim 2, **characterized in that** the linear compensating device (32) has at least one sliding shoe (26, 30), guided in a guide rail (22, 24), for the linear displacement of the multicoupling (14), in particular the guide rail (22, 24) being formed by the mounting device (20).

4. Holding stand according to Claim 2 or 3, **characterized in that** the lift compensating device (38) has a first linear adjustment means (40), configured particularly as a spindle drive, for the linear displacement of the multicoupling (14) and a second linear adjustment means (41), configured particularly as a spindle drive, for the linear displacement of the multicoupling (14), in particular the first linear adjustment means (40) being actuatable independently of the second linear adjustment means (41) for the purpose of providing a rotation of the multicoupling (14).

5. Docking station for docking a chemical plant container to a supply plant, having a holding stand (12) according to one of Claims 1 to 4, a multicoupling (14) accommodated movably by the holding stand (12) and having at least one connecting coupling (54), and at least one conveying hose (52) connected to the connecting coupling (54) of the multicoupling (14), the conveying hose (52) being connected at the end pointing away from the connecting coupling (54) to a hose coupling (60) positioned in a stationary manner in relation to the mounting device (20) of the holding stand (12), the conveying hose (52) having between the hose coupling (60) and the connecting coupling (52), at least in a subregion, an arcuate, in particular substantially semicircular run for the compensation of position changes and/or attitude changes of the multicoupling (14) in relation to the mounting device (20).

6. Docking station for docking a chemical plant container to a supply plant, having a holding stand (12) according to one of Claims 1 to 4, a multicoupling (14) accommodated movably by the holding stand (12) and having at least one connecting coupling (54), and at least one conveying hose (52) connected to the connecting coupling (54) of the multicoupling (14), the conveying hose (52) being connected at the end pointing away from the connecting coupling (54) to a hose coupling (60) positioned in a stationary manner in relation to the mounting device (20) of the holding stand (12), the conveying hose (52) running upwards, against the direction of gravity, from the hose coupling (60) to the connecting coupling (54).

7. Docking station according to Claim 5 or 6, **characterized in that** a hose repository stand (56) with a guide orifice (58) for leading through the at least one conveying hose (52) is provided, the guide orifice (58) delimiting a movability of the conveying hose (52) in the direction of gravity and/or providing movability of the conveying hose (52) transversely to the direction of gravity in order to compensate position changes and/or attitude changes of the multicoupling (14) in relation to the mounting device (20).

8. Chemical plant container for the accommodation and/or processing treatment of substances and/or substance mixtures occurring in chemical plants, having a first multicoupling (14) accommodated movably by a first holding stand (12) according to one of Claims 1 to 4 and having at least one coupling (18, 54) and/or a first docking station (10) according to one of Claims 5 to 7, in particular a second multicoupling (14) accommodated movably by a second holding stand (12) according to one of Claims 1 to 4 and having at least one coupling (18, 54) and/or a second docking station (10) according to one of Claims 5 to 7 being provided.

9. Docking system for filling and/or emptying a chemical plant container, having a supply plant for the provision of starting materials and for the accommodation of products, the supply plant having a multicoupling (14) accommodated movably by a holding stand (12) according to one of Claims 1 to 4 and having at least one coupling (18, 54) and/or a docking station (10) according to one of Claims 5 to 7, and a chemical plant container for the accommodation and/or processing treatment of substances and/or substance mixtures occurring in chemical plants, in particular according to Claim 8, the chemical plant container having a multicoupling (14) accommodated movably by a holding stand (12) according to one of Claims 1 to 4 and having at least one coupling (18, 54) and/or a docking station (10) according to one of Claims 5 to 7, the multicoupling (14) of the supply plant being releasably couplable to the multicoupling (14) of the chemical plant container.

10. Holding stand according to one of Claims 1 to 4, docking station according to one of Claims 5 to 7 and 9, **characterized in that** the holding stand has more than one multicoupling (14) for the coupling of more than one container.

11. Holding stand according to one of Claims 1 to 4, docking station according to one of Claims 5 to 7 and docking system according to Claim 9, **characterized in that** the holding stand, the docking station and the docking system are designed for explosion protection.

## Revendications

1. Châssis de support (12) pour un raccord multiple (14) pour remplir et/ou vider un conteneur d'installation chimique, comportant
un dispositif de montage (20) pour la fixation sensiblement fixe du châssis de support (12) et au moins un dispositif de compensation (32, 38, 42) pouvant être accouplé directement ou indirectement au raccord multiple (14) pour la variation d'une position du raccord multiple (14) par rapport au dispositif de montage (20) dans la direction verticale et/ou dans la direction horizontale et/ou pour la variation d'une position angulaire du raccord multiple (14) par rapport au dispositif de montage (20) autour d'un axe de rotation vertical et/ou horizontal,
dans lequel l'au moins un dispositif de compensation (32, 38, 42) pouvant être accouplé directement ou indirectement au raccord multiple (14) est un dispositif de compensation d'inclinaison pour le pivotement du raccord multiple (14) autour d'un axe d'inclinaison s'étendant en particulier sensiblement verticalement, transversalement à une direction de contact désignée (28) en particulier sensiblement horizontale pour la liaison d'un raccord mâle avec un raccord femelle,
**caractérisé en ce**
**qu'**il est prévu un premier bras de support (44) pour le montage pivotant du raccord multiple (14) et un deuxième bras de support (46) pour le montage pivotant du raccord multiple (14) pour la réalisation d'un dispositif de compensation de basculement (42), le raccord multiple (14) pouvant être monté par le biais d'un premier trou oblong (48) à l'aide du premier bras de support (46) et par le biais d'un deuxième trou oblong (49) à l'aide du deuxième bras de support (46) pour la réalisation du dispositif de compensation d'inclinaison.

2. Châssis de support selon la revendication 1, **caractérisé en ce qu'**il est prévu, en tant qu'au moins un autre dispositif de compensation (32, 38, 42),
un dispositif de compensation linéaire (32) pour le déplacement linéaire du raccord multiple (14) le long d'une direction de contact désignée (28) en particulier sensiblement horizontale pour la liaison d'un raccord mâle avec un raccord femelle, et/ou
un dispositif de compensation de levée (38) pour le déplacement linéaire, en particulier sensiblement vertical, du raccord multiple (14) transversalement à une direction de contact désignée (28) en particulier sensiblement horizontale pour la liaison d'un raccord mâle avec un raccord femelle, et/ou
un dispositif de compensation transversale pour le décalage linéaire, en particulier sensiblement horizontal, du raccord multiple (14) transversalement à une direction de contact désignée (28) en particulier sensiblement horizontale pour la liaison d'un raccord mâle avec un raccord femelle, et/ou
le dispositif de compensation de basculement (42) pour le pivotement du raccord multiple (14) autour d'un axe de rotation de basculement s'étendant en particulier sensiblement horizontalement, transversalement à une direction de contact désignée (28) en particulier sensiblement horizontale pour la liaison d'un raccord mâle avec un raccord femelle, et/ou
un dispositif de compensation de rotation pour la rotation du raccord multiple (14) autour d'un axe de rotation s'étendant une direction de contact (28) en particulier sensiblement horizontale pour la liaison d'un raccord mâle avec un raccord femelle.

3. Châssis de support selon la revendication 2, **caractérisé en ce que** le dispositif de compensation linéaire (32) comprend au moins un patin de glissement (26, 30), guidé dans un rail de guidage (22, 24), pour le déplacement linéaire du raccord multiple (14), le rail de guidage (22, 24) étant en particulier formé par le dispositif de montage (20).

4. Châssis de support selon la revendication 2 ou 3, **caractérisé en ce que** le dispositif de compensation de levée (38) comprend un premier réglage linéaire (40), configuré en particulier comme un entraînement à broche, pour le déplacement linéaire du raccord multiple (14) et un deuxième réglage linéaire (41), configuré en particulier comme un entraînement à broche, pour le déplacement linéaire du raccord multiple (14), le premier réglage linéaire (40) pouvant en particulier être actionné indépendamment du deuxième réglage linéaire (41) pour produire une rotation du raccord multiple (14).

5. Poste d'amarrage pour l'amarrage d'un conteneur d'installation chimique à une installation d'alimentation, comportant un châssis de support (12) selon l'une des revendications 1 à 4, un raccord multiple (14) reçu de manière mobile par le châssis de support (12) et comprenant au moins un raccord de liaison (54) et au moins un tuyau de refoulement (52) relié au raccord de liaison (54) du raccord multiple (14), dans lequel le tuyau de refoulement (52) est, à l'extrémité opposée au raccord de liaison (54), relié à un raccord de tuyau (60) positionné fixement par rapport au dispositif de montage (20) du châssis de support (12), dans lequel le tuyau de refoulement (52) présente, entre le raccord de tuyau (60) et le raccord de liaison (52), au moins dans une région partielle, une allure arquée, en particulier sensiblement semi-circulaire, pour la compensation de changements de position et/ou de changements de situation du raccord multiple (14) par rapport au dispositif de montage (20).

6. Poste d'amarrage pour l'amarrage d'un conteneur d'installation chimique à une installation d'alimentation, comportant un châssis de support (12) selon l'une des revendications 1 à 4, un raccord multiple (14) reçu de manière mobile par le châssis de support (12) et comprenant au moins un raccord de liaison (54) et au moins un tuyau de refoulement (52) relié au raccord de liaison (54) du raccord multiple (14), dans lequel le tuyau de refoulement (52) est, à l'extrémité opposée au raccord de liaison (54), relié à un raccord de tuyau (60) positionné fixement par rapport au dispositif de montage (20) du châssis de support (12), dans lequel le tuyau de refoulement (52) s'étend de manière ascendante, en sens inverse au sens de la gravité, du raccord de tuyau (60) au raccord de liaison (54).

7. Poste d'amarrage selon la revendication 5 ou 6, **caractérisé en ce qu'**il est prévu un châssis de rangement de tuyau (56) doté d'une ouverture de guidage (58) pour le guidage de l'au moins un tuyau de refoulement (52), l'ouverture de guidage (58) limitant une mobilité du tuyau de refoulement (52) dans le sens de la gravité et/ou assurant une mobilité du tuyau de refoulement (52) transversalement au sens de la gravité pour la compensation de changements de position et/ou de changements de situation du raccord multiple (14) par rapport au dispositif de montage (20).

8. Conteneur d'installation chimique pour la réception et/ou le traitement technique de substances et/ou de mélanges de substances se présentant dans des installations chimiques, comprenant un premier raccord multiple (14) reçu de manière mobile par un premier châssis de support (12) selon l'une des revendications 1 à 4 et comprenant au moins un raccord (18, 54) et/ou un premier poste d'amarrage (10) selon l'une des revendications 5 à 7, dans lequel il est prévu en particulier un deuxième raccord multiple (14) reçu de manière mobile par un deuxième châssis de support (12) selon l'une des revendications 1 à 4 et comprenant au moins un raccord (18, 54) et/ou un deuxième poste d'amarrage (10) selon l'une des revendications 5 à 7.

9. Système d'amarrage pour remplir et/ou vider un conteneur d'installation chimique, comprenant une installation d'alimentation pour la fourniture de substances de départ et la réception de produits, dans lequel l'installation d'alimentation comprend un raccord multiple (14) reçu de manière mobile par un châssis de support (12) selon l'une des revendications 1 à 4 et comprenant au moins un raccord (18, 54) et/ou un poste d'amarrage (10) selon l'une des revendications 5 à 7, et un conteneur d'installation chimique pour la réception et/ou le traitement technique de substances et/ou de mélanges de substances se présentant dans des installations chimiques, en particulier selon la revendication 8, dans lequel le conteneur d'installation chimique comprend un raccord multiple (14) reçu de manière mobile par un châssis de support (12) selon l'une des revendications 1 à 4 et comprenant au moins un raccord (18, 54) et/ou un poste d'amarrage (10) selon l'une des revendications 5 à 7, dans lequel le raccord multiple (14) de l'installation d'alimentation peut être accouplé de manière détachable au raccord multiple (14) du conteneur d'installation chimique.

10. Châssis de support selon l'une des revendications 1 à 4, poste d'amarrage selon l'une des revendications 5 à 7 et système d'amarrage selon la revendication 9, **caractérisés en ce que** le châssis de support comprend plus d'un raccord multiple (14) pour l'accouplement de plus d'un conteneur.

11. Châssis de support selon l'une des revendications 1 à 4, poste d'amarrage selon l'une des revendications 5 à 7 et système d'amarrage selon la revendication 10, **caractérisés en ce que** le châssis de support, le poste d'amarrage et le système d'amarrage sont conçus pour la protection contre les explosions.
